# FASCICULE DE BREVET EUROPEEN

(11) **EP 2 781 693 B1**
(45) Date de publication et mention de la délivrance du brevet: **20.01.2016**
(21) Numéro de dépôt: 14160596.4
(22) Date de dépôt: 18.03.2014
(51) Int. Cl.: F01D 5/18, H05B 3/56

(54) **Elément conducteur pour la réalisation d'un système chauffant**
Leitungselement zur Herstellung eines Heizsystems
Conductive element for manufacturing a heating system

(30) Priorité: 21.03.2013 FR 1352521
(43) Date de publication de la demande: 24.09.2014
(73) Titulaire: Tresse Métallique J. Forissier, 42400 Saint-Chamond (FR)
(72) Inventeur: Machado, Antonio, 42152 L'Horme (FR); Boidard, Denis, 69350 La Mulatière (FR)
(74) Mandataire: Cabinet Laurent & Charras

(56) Documents cités:
- EP-A2- 1 091 623
- EP-A2- 1 820 943
- WO-A1-2008/126518
- DE-A1- 1 946 753
- GB-A- 801 711

## Description

### DOMAINE TECHNIQUE

La présente invention concerne un élément conducteur pour la réalisation d'un système chauffant. Une utilisation avantageuse dudit élément conducteur se trouve notamment dans la réalisation d'un système de dégivrage pour une pale d'hélicoptère.

### ART ANTERIEUR

Il est bien connu de l'état de la technique d'utiliser des éléments conducteurs pour la réalisation d'un système chauffant. Ces éléments conducteurs peuvent notamment se présenter sous la forme d'une tresse métallique entourée par une gaine isolante. Pour la réalisation d'un système chauffant, une pluralité de tresses métalliques sont connectées à un circuit électrique. La circulation du courant électrique le long desdites tresses créée un échauffement par effet Joules et permet ainsi la réalisation dudit système chauffant.

Le document DE 19746753 décrit un tel élément conducteur.

Lorsque ces éléments de l'état de la technique sont utilisés pour la réalisation d'un système de dégivrage d'une pale d'hélicoptère par exemple, ceux-ci présentent plusieurs inconvénients inhérents à leur structure.

Dans cette utilisation, chaque tresse métallique entourée d'une gaine est noyée dans l'épaisseur de la pale d'hélicoptère. Ainsi plusieurs tresses métalliques sont utilisées et l'imprégnation de celles-ci ainsi que leur positionnement dans l'épaisseur de la pale ne sont pas maitrisés. Il peut notamment se créer des déformations à l'intérieur de la pale nuisant ainsi à sa conception générale et diminuant également l'efficacité du système de dégivrage réalisé.

### EXPOSE DE L'INVENTION

Le problème que se propose de résoudre l'invention est donc de fournir un élément conducteur pour la réalisation d'un système chauffant qui soit de conception simple sure et rationnelle et qui donne entière satisfaction à son utilisateur.

Un autre objectif de l'invention est également de proposer un élément conducteur qui puisse être utilisé d'une manière optimale pour la réalisation d'un système de dégivrage pour pale d'hélicoptère par exemple.

En d'autre terme l'élément conducteur selon l'invention doit permettre une imprégnation et un positionnement facilité et optimal de celui-ci dans l'épaisseur d'une pale d'hélicoptère par exemple.

Pour résoudre les problèmes précités, il a été mis au point un élément conducteur pour la réalisation d'un système chauffant, conforme aux caractéristiques de la revendication 1.

De cette manière, l'élément conducteur comprend une pluralité de tresses métalliques positionnées et maintenues les unes par rapport aux autres. La structure dudit élément permet d'en maitriser son imprégnation et son positionnement dans l'épaisseur d'une pale d'hélicoptère sans notamment créer de surépaisseur.

L'élément conducteur est « monobloc » en ce sens que les différentes tresses plates, conductrices de l'électricité, demeurent parallèles et équidistantes au moment de leur insertion dans une pale d'hélicoptère, notamment.

L'élément conducteur permet notamment à la gaine isolante d'épouser une forme quelconque, convexe par exemple, sans être gênée par une tresse métallique.

Avantageusement, la gaine isolante définit des canaux sur toute sa longueur, lesdits canaux sont aptes à recevoir une tresse métallique avec capacité de coulissement. Cela permet notamment aux tresses métalliques de ne pas adhérer l'intérieur de la gaine afin de faciliter toutes étapes ultérieures consistant à dénuder lesdites tresses par exemple.

Une utilisation préférée de l'élément conducteur selon l'invention se trouve notamment dans son intégration dans l'épaisseur d'une pale d'hélicoptère, et dans sa connexion à un circuit électrique, pour la réalisation d'un système de dégivrage de ladite pale.

L'invention concerne également une pale d'hélicoptère comprenant un élément conducteur tel que précité, noyé dans son épaisseur.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique vue de dessus de l'élément conducteur pour la réalisation d'un système chauffant selon l'invention ;
- la figure 2 est une représentation schématique vue en coupe transversale dudit élément conducteur ;

### EXPOSE DETAILLE DE L'INVENTION

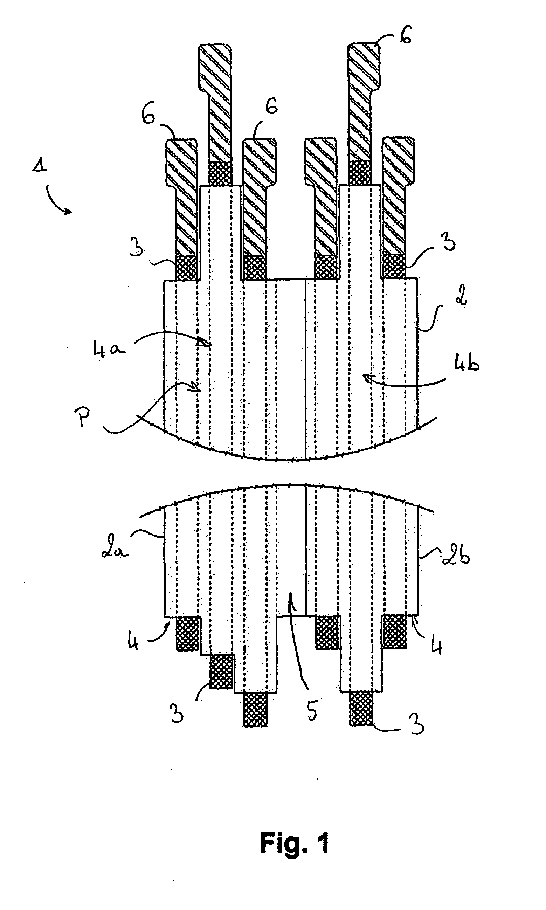

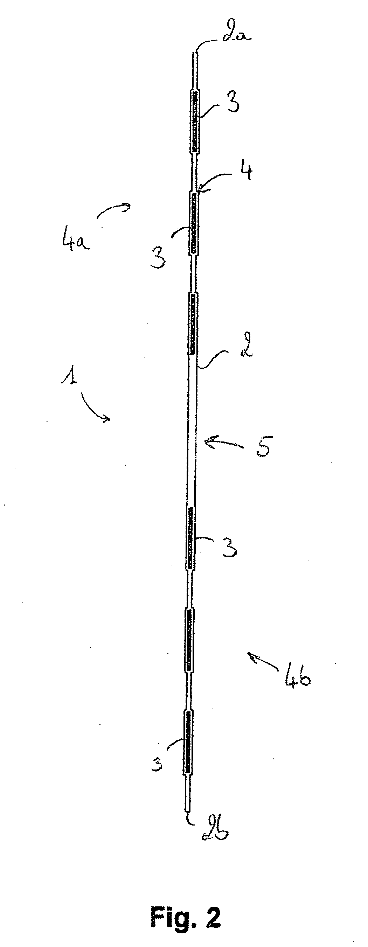

En référence aux figures 1 et 2 qui illustrent l'élément conducteur (1) pour la réalisation d'un système chauffant selon l'invention, vue de face et en coupe longitudinale, celui-ci comprend une gaine isolante (2) renfermant des tresses métalliques (3).

La gaine isolante (2) est plate, de très fine épaisseur pour ne pas nuire à l'efficacité du système chauffant, et est notamment réalisée en thermoplastique. La gaine plate (2) s'étend selon une direction longitudinale et définit de cette manière un plan (P).

Dans l'ensemble illustré, la gaine (2) définit six canaux (4) sur toute sa longueur, lesdits canaux (4) sont parallèles entre eux et dans le plan (P) de ladite gaine (2). Les canaux (4) sont séparés en deux zones (4a, 4b) sur la surface de la gaine (2). En d'autres termes, trois canaux (4) sont agencés à proximité d'un premier bord latéral (2a) de la gaine (2), et les trois autres canaux (4) sont agencés à proximité du deuxième bord latéral (2b) de la gaine (2), parallèle au premier bord (2a) de ladite gaine (2). Une zone centrale neutre (5), c'est-à-dire sans canaux (4), délimite ainsi les deux zones (4a, 4b) comprenant les canaux (4).

Chaque canal (4) est apte à recevoir une tresse métallique (3) avec capacité de coulissement à l'intérieur de celui-ci. Les tresses métalliques (3) sont plates et constituées d'une pluralité de fils métalliques tressés entre eux. Les tresses métalliques (3) sont ainsi disposées parallèlement les unes aux autres, sur la longueur et dans le plan (P) de la gaine (2).

Lorsque les six tresses métalliques (3) sont montées à l'intérieur de la gaine (2), et plus précisément à l'intérieur desdits canaux (4), celles-ci débordent de ladite gaine (2) pour permettre leur connexion avec des connecteurs métalliques (6), eux même, et d'une manière bien connue, connectés à un circuit électrique (non représenté) pour la réalisation du système chauffant.

Selon une utilisation préférée et non limitative de l'élément conducteur (1) selon l'invention, celui-ci est noyé dans l'épaisseur d'une pale d'hélicoptère par exemple (non représentée), comme indiqué. L'élément conducteur (1) peut comprendre six tresses métalliques (3) maintenues et positionnées les unes par rapport aux autres. Cela permet d'avoir une imprégnation et un positionnement de celles-ci bien maitrisés. Les tresses métalliques (3) sont ensuite connectées par leurs extrémités aux connecteurs métalliques (6), eux-mêmes connectés au circuit électrique pour la réalisation d'un système chauffant et de cette manière pour la réalisation d'un système de dégivrage pour ladite pale d'hélicoptère.

La structure plate de l'élément conducteur (1) selon l'invention permet d'en maitriser son positionnement et son imprégnation mais permet également de ne pas créer de surépaisseur à l'intérieur de la pale d'hélicoptère par exemple pouvant nuire à la conception générale de ladite pale ainsi qu'à l'efficacité du système dégivrant ainsi crée. La zone neutre (5) dudit élément conducteur (1) lui permet d'avoir une zone déformable lui permettant de suivre un profil de manière optimale, tel qu'un profil convexe par exemple.

On obtient ainsi, une pale d'hélicoptère comprenant un élément conducteur (1), pour la réalisation d'un système chauffant, noyé dans son épaisseur. Ledit élément conducteur (1) étant relié à un circuit électrique pour la réalisation d'un système de dégivrage de ladite pale.

De ce qui précède, l'invention donne entière satisfaction, tant en termes de maintien que d'imprégnation dudit élément conducteur (1) dans une pale d'hélicoptère par exemple. L'invention est simple, sûre et rationnelle.

## Revendications

1. Elément conducteur (1) pour la réalisation d'un système chauffant ***caractérisé en ce qu***'il comprend une gaine (2) plate, isolante et définissant un plan (P), ladite gaine isolante (2) est réalisée en thermoplastique et définit deux zones (4a, 4b) dont chacune renferme au moins une tresse métallique plate (3), lesdites deux zones (4a, 4b) étant séparées par une zone neutre (5) ne renfermant pas de tresses (3) lesdites tresses étant disposées sur la longueur, parallèlement l'une par rapport à l'autre et dans le plan (P) de ladite gaine isolante (2) et débordent de la gaine isolante (2) pour permettre leur connexion avec des connecteurs métalliques (6).

2. Elément conducteur (1) selon la revendication 1, ***caractérisé en ce que*** la gaine isolante (2) définit des canaux (4) sur toute sa longueur, lesdits canaux (4) étant aptes à recevoir une tresse métallique (3) avec capacité de coulissement.

3. Elément conducteur (1) selon l'une quelconque des revendications 1 à 2 utilisé comme élément conducteur (1) destiné à être intégré dans l'épaisseur d'une pale d'hélicoptère et relié à un circuit électrique pour la réalisation d'un système de dégivrage de ladite pale.

4. Pale d'hélicoptère ***caractérisée en ce qu***'elle comprend un élément conducteur (1) selon l'une quelconque des revendications 1 à 3 noyé dans son épaisseur.

## Patentansprüche

1. Leitfähiges Element (1) zur Realisierung eines Heizsystems, **dadurch gekennzeichnet, dass** es eine flache, isolierende Umhüllung (2) enthält, die eine Ebene (P) definiert, wobei die isolierende Umhüllung (2) aus thermoplastischem Material hergestellt ist und zwei Bereiche (4a, 4b) definiert, wobei jeder Bereich mindestens ein flaches Drahtgeflecht (3) umschließt und die beiden Bereiche (4a, 4b) durch einen neutralen Bereich (5) getrennt werden, der kein Geflecht (3) umschließt, wobei die Geflechte über die gesamte Länge parallel zueinander und auf der Ebene (P) der isolierenden Umhüllung (2) angeordnet sind und aus der isolierenden Umhüllung (2) herausragen, um an die metallischen Steckverbinder (6) angeschlossen werden zu können.

2. Leitfähiges Element (1) nach Anspruch 1, **dadurch gekennzeichnet, dass** die isolierende Umhüllung (2) über ihre gesamte Länge Kanäle (4) definiert, wobei die Kanäle (4) ein Drahtgeflecht (3) aufnehmen können, welches verschoben werden kann.

3. Leitfähiges Element (1) nach einem der Ansprüche 1 oder 2, das als leitfähiges Element (1) zum Einbau in die Dicke eines Hubschrauber-Rotorblatts verwendet und zur Realisierung eines Enteisungssystems des Rotorblatts an einen elektrischen Schaltkreis angeschlossen wird.

4. Hubschrauber-Rotorblatt, **dadurch gekennzeichnet, dass** das Rotorblatt ein leitfähiges Element (1) nach einem der Ansprüche 1 bis 3 enthält, welches in die Rotorblattdicke eingelassen ist.

## Claims

1. Conductive member (1) for the implementation of a heating system, **characterized in that** it comprises a sheath (2) flat, insulating and defining a plane (P), said insulating sheath (2) is made of thermoplastic and defines two areas (4a, 4b) each of which contains at least one flat metal braid (3), said two area (4a, 4b) being separated by a neutral area (5) containing no braid (3), said braids being disposed lengthwise and parallel to one other and in the plane (P) of said insulating sheath (2), and extend beyond the insulating sheath (2) to enable their connection with metal connectors (6).

2. Conductive member (1) according to claim 1, **characterized in that** the insulating sheath (2) defines channels (4) over its full length, said channels (4) being adapted to receive a metal braid (3) with sliding ability.

3. Conductive member (1) according to claim 1 or 2, used as a conductive member (1) intended to be integrated in the thickness of a helicopter blade and connected to an electrical circuit for the implementation of a defrosting system of said blade.

4. Helicopter blade **characterized in that** it comprises a conductive member (1) according to any one of claims 1 to 3 embedded in its thickness.
